# EUROPÄISCHE PATENTSCHRIFT

(11) **EP 2 651 815 B1**
(45) Veröffentlichungstag und Bekanntmachung des Hinweises auf die Patenterteilung: **16.12.2015**
(21) Anmeldenummer: 12704389.1
(22) Anmeldetag: 07.02.2012
(51) Int. Cl.: C01B 3/04, C01B 13/02

(54) **VORRICHTUNG ZUM SPALTEN EINER CHEMISCHEN VERBINDUNG UND VERFAHREN HIERZU**
DEVICE FOR SPLITTING A CHEMICAL COMPOUND, AND ASSOCIATED METHOD
INSTALLATION DE FISSION D'UN COMPOSÉ CHIMIQUE ET PROCÉDÉ CORRESPONDANT

(30) Priorität: 18.02.2011 DE 102011004397
(43) Veröffentlichungstag der Anmeldung: 23.10.2013
(73) Patentinhaber: Siemens Aktiengesellschaft, 80333 München (DE)
(72) Erfinder: BALDAUF, Manfred, 91056 Erlangen (DE); HAMMER, Thomas, 91334 Hemhofen (DE); KOSSE, Sylvio, 91052 Erlangen (DE); ZIMMERMANN, Gerhard, 91315 Höchstadt/Aisch (DE)
(86) Internationale Anmeldenummer: PCT/EP2012/051994
(87) Internationale Veröffentlichungsnummer: WO 2012/110352

(56) Entgegenhaltungen:
- WO-A1-2009/127759
- JP-A- 2006 089 336
- JP-A- 2006 265 697
- US-A1- 2007 205 111
- US-A1- 2008 223 713

## Beschreibung

Die Erfindung betrifft eine Vorrichtung zum Spalten einer chemischen Verbindung nach Anspruch 1 sowie ein Verfahren zum Spalten einer chemischen Verbindung nach Patentanspruch 11.

Wasserstoff wird zunehmend ein wichtiger Rohstoff in der chemischen Industrie, dieser wird heute fast ausschließlich aus fossilen Energieträgern, insbesondere durch Elektrolyse erzeugt. Selbst wenn vermehrt Überschussstrom aus erneuerbaren Energiequellen für die Wasserstofferzeugung herangezogen werden kann, sind bis dato fossile Energieträger in absehbarer Zukunft für die Bereitstellung von Strom zur Elektrolyse und Wasser zu Wasserstoff unverzichtbar.

Zur Reduzierung des Treibhauseffektes ist es jedoch notwendig, die Anwendung fossiler Brennstoffe zu reduzieren, weshalb der Erfindung die Aufgabe zugrunde liegt, eine Vorrichtung und ein Verfahren zur Spaltung von chemischen Verbindungen, insbesondere von Wasser bereitzustellen, durch die der Bedarf an fossilen Brennstoffen zur Erzeugung von elektrischem Strom verringert wird. Aus WO 2009/127759 A1 ist eine Vorrichtung zur Spaltung von Wasser unter Verwendung eines piezoelektrischen Materials bekannt.

Die Lösung der Aufgabe besteht aber in einer Vorrichtung zur Spaltung einer chemischen Verbindung nach Patentanspruch 1. Diese Vorrichtung umfasst eine Temperiervorrichtung, zwei voneinander getrennte Gasräume sowie ein Element, das pyroelektrisches Material umfasst. Dieses, pyroelektrische Material umfassende Element (im weiteren vereinfachend Element genannt) weist mindestens zwei Oberflächen mit unterschiedlich polarisierten Ladungen auf. Diese Oberflächen stehen zumindest teilweise im Kontakt mit der zu spaltenden chemischen Verbindung. Die Oberflächen sind jeweils einen der getrennte Gasräume der Vorrichtung zugewandt, wobei die an der Oberfläche durch Spaltung der chemischen Verbindung entstehenden Gase voneinander getrennt in den der jeweiligen Oberfläche zugeordneten Gasraum gelangt.

Vorteilhafte Ausgestaltungen der Erfindung sind Gegenstand der Unteransprüche 2 bis 6.

Durch die Temperiervorrichtung wird in an sich bekannter Weise, das pyroelektrische Material aufgeheizt und wieder abgekühlt. Durch diese zeitlich veränderliche Temperatur des pyroelektrischen Materials entstehen auf den Oberflächen des Elementes, das das pyroelektrische Material umfasst, elektrische Ladungen. Diese elektrischen Ladungen dienen dazu, die zu spaltende chemische Verbindung in weitere, insbesondere gasförmige chemische Verbindungen zu spalten. Bei der zur Spaltenden chemischer Verbindung handelt es sich bevorzugt um Wasser, das an den Oberflächen des Elementes zu molekularem Wasserstoff (H₂) und molekularem Sauerstoff (O₂) zerlegt wird. Das zu spaltende Material sollte bei Betriebstemperatur der Vorrichtung einen anderen Aggregatszustand aufweisen als die Spaltungsprodukte, also insbesondere im flüssigen Zustand vorliegen, während die Produkte gasförmig sind. Hierdurch wird eine Vorrichtung von Produkten und Edukten vermieden.

Da die Oberflächen des Elementes jeweils einem Gasraum zugewandt sind, entstehen je nach Polarisierung an den unterschiedlichen Oberflächen unterschiedliche Spaltungsprodukte der chemischen Verbindung. Insbesondere entsteht bei der Spaltung von Wasser an einer Oberfläche Wasserstoff und an der anderen Oberfläche bevorzugt Sauerstoff. Diese beiden Spaltungsprodukte werden in getrennte Gasräume abgeleitet und sind somit bereits nach ihrer Entstehung chemisch voneinander getrennt. Dies bedeutet, dass im Idealfall keine weitere chemische Trennung des Gasgemisches erfolgen muss, insbesondere wird bei der Stoffkombination von Wasserstoff und Sauerstoff einem Zusammentreffen dieser beiden Verbindungen verhindert, was einen enormen Vorteil an Sicherheit mit sich bringt, da eine Mischung aus Wasserstoff und Sauerstoff bekanntermaßen hoch explosiv ist.

Unter dem Begriff der Temperiervorrichtung wird eine Vorrichtung verstanden, die grundsätzlich dazu geeignet ist, das Element mit dem pyroelektrischen Material einen zeitlichen Temperaturgradienten ΔD/Δt zu unterziehen. Das bedeutet, dass es sich um eine Aufheiz- und Abkühlvorgänge handelt. Pyroelektrisches Material ist bei konstanter Temperatur elektrisch inaktiv.

Unter dem Begriff Gasraum wird der Raum in der Vorrichtung verstanden, der einerseits im Kontakt mit einer der Oberflächen des Elementes steht und der gegebenenfalls zumindest teilweise mit der zur Spaltung chemischen Verbindung gefüllt ist. Der Gasraum kann auch als Reaktionsraum bezeichnet werden.

Das pyroelektrisches Material umfassende Element weist mindestens zwei Oberflächen auf. Dabei bestehen die Oberflächen gegebenenfalls zumindest teilweise aus Elektroden bzw. Elektrodenmaterial. Wenn von der Oberfläche des Elementes gesprochen wird, so ist die Oberfläche gemeint, die dem Gasraum zugewandt ist, die grundsätzlich aus pyroelektrischem Material oder einer auf dieser angebrachten Beschichtung bzw. einer auf dieser angebrachten Elektrode bestehen kann. Hierbei kann die Elektrode die Oberfläche bei Bedarf auch nur teilweise bedecken.

In einer weiteren vorteilhaften Ausgestaltungsform der Erfindung ist es zweckmäßig, eine Elektrode so anzuordnen, dass sie von der Oberfläche des Elementes beabstandet angeordnet ist. Hierbei kann es zweckmäßig sein, dass zwischen der Elektrode und der Oberfläche des Elementes die zu spaltende chemische Verbindung sich befindet.

In einer weiteren vorteilhaften Ausgestaltungsform der Erfindung wird die Temperiervorrichtung mit einem Wärmeübertragungsmedium gespeist, das wiederum Abwärme aus einem thermischen Prozess an das Element überträgt. Bei der Nutzung von insbesondere niedergrädiger Abwärme (< 200°C) kann Energie, die ansonsten durch Abkühlen an die Atmosphäre übertragen werden würde, zur Erzeugung von Strom und zur Elektrolyse von Wasserstoff gewinnbringend und umweltschonend genutzt werden.

Ein weiterer Bestandteil der Erfindung ist ein Verfahren zum Spalten einer chemischen Verbindung, insbesondere von Wasser, wobei die chemische Verbindung in Kontakte mit zwei Oberflächen eines pyroelektrisches Material enthaltenden Elementes gebracht wird. Das pyroelektrische Material wird durch eine Temperiervorrichtung einer zeitlich dynamischen Temperaturänderung unterzogen, wodurch an den Oberflächen des Elementes Ladungen entstehen, durch die die chemische Verbindung in gasförmige Verbindung gespaltet wird, die jeweils in zwei durch das Element getrennte Gasräume abgeleitet werden. Die gasförmigen Verbindungen, die an den jeweiligen Oberflächen an den getrennten Gasräumen entstehen, unterscheiden sich in der chemischen Zusammensetzung.

Weitere vorteilhafte Ausgestaltungsformen und weitere Merkmale der Erfindung werden anhand der folgenden Figuren näher erläutert. Dabei handelt es sich lediglich um beispielhafte Ausgestaltungsformen, die auch in ihren Merkmalskombinationen keine Einschränkung des Schutzbereiches darstellen. Merkmale mit derselben Bezeichnung, die in unterschiedlichen Ausführungsformen in den Figuren dargestellt sind, weisen jeweils dieselben Bezugszeichen auf.

Dabei zeigen:
- Figur 1: eine schematische Darstellung einer Vorrichtung zum Spalten einer chemischen Verbindung in gasförmige Bestandteile,
- Figur 2: eine Vorrichtung gemäß Figur 1 mit unterschiedlich ausgestalteter Temperiervorrichtung und Elektrodenanordnung,
- Figur 3: eine schematische Darstellung der Vorrichtung nach den Figuren 1 und 2, wobei die Zellen in Reihe angeordnet sind und
- Figur 4: eine Ausgestaltung einer Vorrichtung zur Spaltung von chemischen Verbindungen, wobei die Zellen von der Verbindung durchflossen werden und
- Figur 5: ein Element 8 mit an dessen Oberfläche aufgebrachten pyroelektrischem Material.

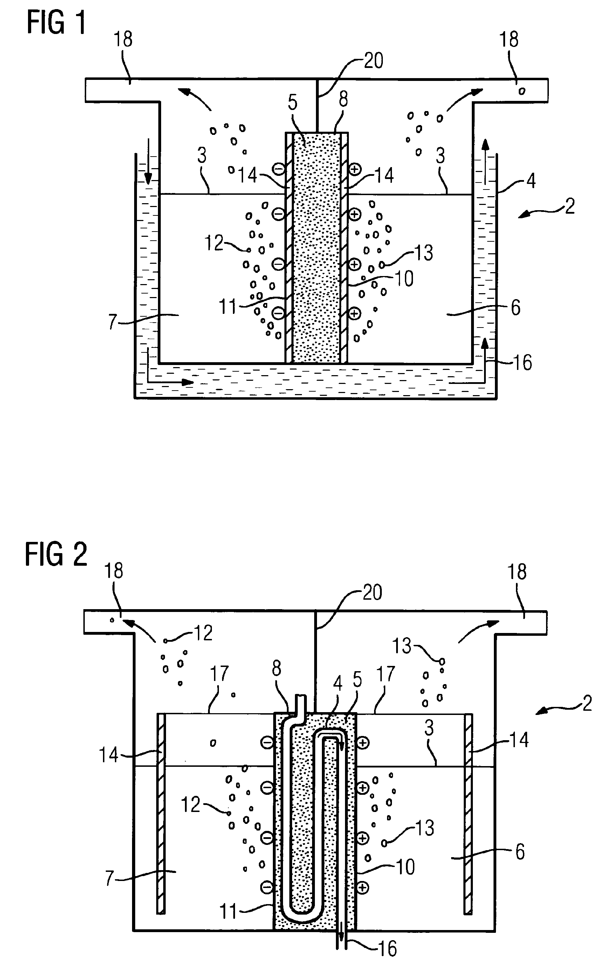

In Figur 1 ist eine Vorrichtung zur Spaltung eines flüssigen Materials, insbesondere von Wasser in gasförmige Produkte dargestellt. Im Weiteren wird hierbei von der Elektrolyse von Wasser gesprochen. Grundsätzlich könnten mit dieser Vorrichtung auch chemische Verbindungen, die bei Prozesstemperatur im flüssigen Zustand vorliegen in gasförmige Produkte zerlegt werden. Der Unterschied des Aggregatzustandes zwischen Edukten und Produkten ist insofern wichtig, da Edukte und Produkte im selben Gasraum vorliegen und sich bei selbem Aggregatszustand vermischen würden.

Die Vorrichtung 2 weist ein Element 8 auf, dass pyroelektrisches Material 5 umfasst und das das Innere der Vorrichtung 2 in zwei unterschiedliche Gasräume 6 und 7 trennt. Bei den Gasräumen 6 und 7 handelt es sich eigentlich um Reaktionsräume, in denen bei der vorliegenden chemischen Reaktion als Produkt ein Gas entsteht. Zudem befindet sich in den Gasräumen auch das zu spaltende Ausgangsmaterial, also die chemische Verbindung, eine chemische Verbindung 3, die hier im Weiteren als Wasser 3 bezeichnet wird. Diese Verbindung 3 liegt bei Prozesstemperatur der Vorrichtung 2 im flüssigen Zustand vor.

Das Element 8 ist hierbei so ausgestaltet, dass das pyroelektrische Material 5 als Festkörper im Inneren des Elementes 8 angeordnet ist, an Oberflächen 10 und 11 des Elementes 8 sind Elektroden 14 angeordnet, die beim Betrieb der Vorrichtung 2 unterschiedliche Polarisierungen aufweisen, die durch die Ladungen '+' und '-' veranschaulicht sind.

Durch das Vorliegen von unterschiedlichen Ladungen an den Oberflächen 10 und 11 des Elementes 8 in den beiden getrennten Gasräumen 6 und 7 kommt es zur Elektrolyse, wobei je nach vorherrschender Ladung an einer Oberfläche 11 Wasserstoff und an der anderen Oberfläche 10 Sauerstoff entsteht. Diese Produktgase Wasserstoff und Sauerstoff steigen als Blasen 12 und 13 in dem jeweiligen Gasraum 6 und 7 auf und werden über eine Gasableitung 18 aus den jeweiligen Gasräumen 6 und 7 getrennt abtransportiert.

Im Folgenden wird auf die Erzeugung der Ladungen an den Oberflächen des Elementes 8 eingegangen. Das in dem Element 8 enthaltene pyroelektrische Material ist so ausgestaltet, dass die Kristalle des pyroelektrischen Materials das beispielsweise aus Nioblanthanat bestehen kann, bestimmte Vorzugsrichtungen aufweisen. Durch einen zeitlichen Temperaturgradienten, also einer Abkühlung und Aufheizung der Kristalle des pyroelektrischen Materials 5 werden an den Enden der Kristallite des pyroelektrischen Materials 5 Ladungen erzeugt.

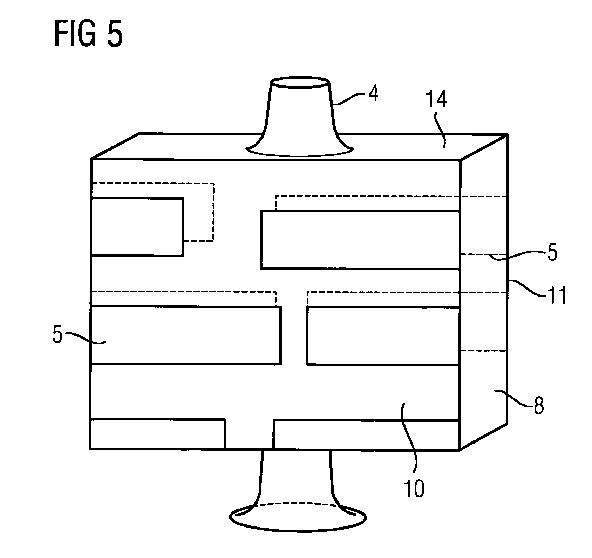

Für die Erzeugung dieser Ladung ist eine Vorrichtung notwendig, die eine Temperaturänderung des Elementes, insbesondere der pyroelektrischen Kristalle vornimmt. Dies ist in Figur 1 durch die Temperiervorrichtung 4 gegeben. Die Temperiervorrichtung 4 in Figur 1 ist derart ausgestaltet, dass sie die innere Zelle der Vorrichtung 2 umgibt, und dabei von einem Wärmeübertragungsmedium 16, beispielsweise Wasser, durchflossen wird. Das Wärmeübertragungsmedium 16 enthält Abwärme aus einem weiteren thermischen Prozess, insbesondere aus einem industriellen Prozess. Insbesondere Abwärme, die in geringere Temperaturen, beispielsweise unter 200°, insbesondere unter 100° aufweist, lässt sich für thermische Maßnahmen nur schwer nutzen. Gegebenenfalls durch Wärmetauschprozesse kann diese Abwärme aus industriellen Prozessen auf das Wärmeübertragungsmedium 16 übertragen werden und das wiederum ebenfalls durch einen Wärmetauschprozess die Wärme an das Element 8 abgibt. In Figur 1 ist dieser Wärmeübertragungsprozess in der Form dargestellt, dass das Wärmeübertragungsmedium 16 seine Wärme an die gesamte innere Zelle (Element und Gasräume) der Vorrichtung 2 abgibt. Hierbei wird sowohl die zu spaltenden Flüssigkeit Verbindung 3 also das Wasser 3 als auch das Element 8, das sich in der Vorrichtung 2 befindet, gemeinsam aufgeheizt und wiederum abgekühlt. Weitere vorteilhafte Wärmetauschprozesse bzw. Temperierprozesse werden noch bezüglich der Figuren 2 und 5 erläutert.

Das Element 8 trennt die Vorrichtung 2 in die zwei Gasräume 6 und 7, so dass die Oberflächen 10 und 11 des Elements 8 jeweils einen dieser Gasräume zugewandt sind. Dabei ist es nicht nötig, wie in Figur 1 schematisch dargestellt, dass die beiden Gasräume in ihrer Gesamtheit durch das Element 8 getrennt werden müssen. Insbesondere können in den nicht reaktiven Bereichen Trennanordnungen 20 vorgesehen sein, die beispielsweise aus Glas oder einem anderen nicht elektrisch leitenden Material bestehen. Diese Trennanordnungen 20 sind im Gegensatz zum Element 8 kostengünstiger herzustellen.

Der wesentliche Vorteil dieser Anordnung besteht darin, dass jeder Gasraum 6, 7 unterschiedliche Ladung, eine positive oder eine negative Ladung anliegen hat, so dass in jedem Gasraum eine andere Reaktion entsteht. Die Eduktgase sind bei ihrer Entstehung chemisch voneinander getrennt. Würde das pyroelektrische Material 5 direkt ins Wasser gegeben werden, so würde, um am Beispiel des Wassers zu bleiben, Sauerstoff und Wasserstoff als Gasgemisch entstehen und müsste anschließend voneinander getrennt werden. Die Trennung in zwei Gasräume bewirkt somit auch eine Trennung der Eduktgase und macht somit einen weiteren Prozessschritt überflüssig.

Es ist dabei jedoch nicht auszuschließen, dass in einen Gasraum tatsächlich das Produktgas in Reinstform entsteht. In dem Gasraum, in dem beispielsweise Wasserstoff entsteht, kann durchaus auch eine Verunreinigung von Sauerstoff mit auftreten. Diese Verunreinigungen sind abhängig von den Oberflächenstrukturen der Oberflächen 10 oder 11 sowie von der Kristallstruktur des pyroelektrischen Materials 5. Durch geschickte Anordnung dieser Oberflächenstrukturen ist es jedoch möglich, ein möglichst reines Produkt bereitzustellen.

In Figur 2 ist eine mit der Figur 1 vergleichbare Zelle abgebildet, sie weist jedoch zwei Variationen auf, die jedoch nicht notwendigerweise miteinander kombiniert werden müssen. Die erste Variation der Figur 2 gegenüber der Figur 1 besteht darin, dass das Element 8 direkt durch die Temperiervorrichtung 4 gekühlt wird. Die Temperiervorrichtung 4 verläuft in Form von Kanälen durch das Element 8, durch die das Wärmeübertragungsmedium 16 geleitet wird. Auf direkte Temperierung des Elementes 8 reagiert das Gesamtsystem weniger träge, es kann insbesondere ein bestimmter Temperaturbereich exakt eingestellt werden. Grundsätzlich ist es auch zweckmäßig, in den einzelnen Gasräumen die Temperiervorrichtung 4 anzuordnen (graphisch nicht dargestellt) und die Gasräume 6 und 7, insbesondere das darin enthaltene Wasser 3 durch jeweils eine separate Temperiervorrichtung auf unterschiedlichen Temperaturen zu temperieren.

Der zweite Unterschied in Figur 2 bzgl. Figur 1, der von der alternativen Temperierung der Figur 2 jedoch vollkommen unabhängig ist, besteht darin, dass die Oberflächen 10 und 11 des Elementes 8 nicht mit den Elektroden 14 beschichtet sind. Die Elektroden 14 befinden sich vielmehr durch das Wasser 3 von den Oberflächen 10 und 11 getrennt, in dem jeweiligen Gasraum 6 und 7. Hierbei sind die Elektroden 14 über einen Verbindungsleiter 17 miteinander verbunden. Zwischen den Oberflächen 10 und 11 und den Elektroden 14 sollte jedoch eine Potentialdifferenz vorhanden sein. Zur Spaltung von Wasser sollte die Potentialdifferenz, insbesondere 1,23 V betragen. Zwischen den Elektroden 14 in den beiden Gasräumen 6 und 7 kann jedoch sehr wohl eine größere Potentialdifferenz bestehen, die gegebenenfalls dazu dienen kann, elektrische Energie zwischen den beiden Elektroden 14 abzugreifen.

Der Gasdruck, der in den Gasräumen 6 und 7 vorliegt, muss nicht notwendigerweise Atmosphärendruck sein. Je nach Anordnung und je nach Potentialdifferenz, insbesondere auch je nach dem, welche Verbindung 3 gespalten werden soll, kann ein höherer oder niedrigerer Gasdruck durchaus zweckmäßig sein.

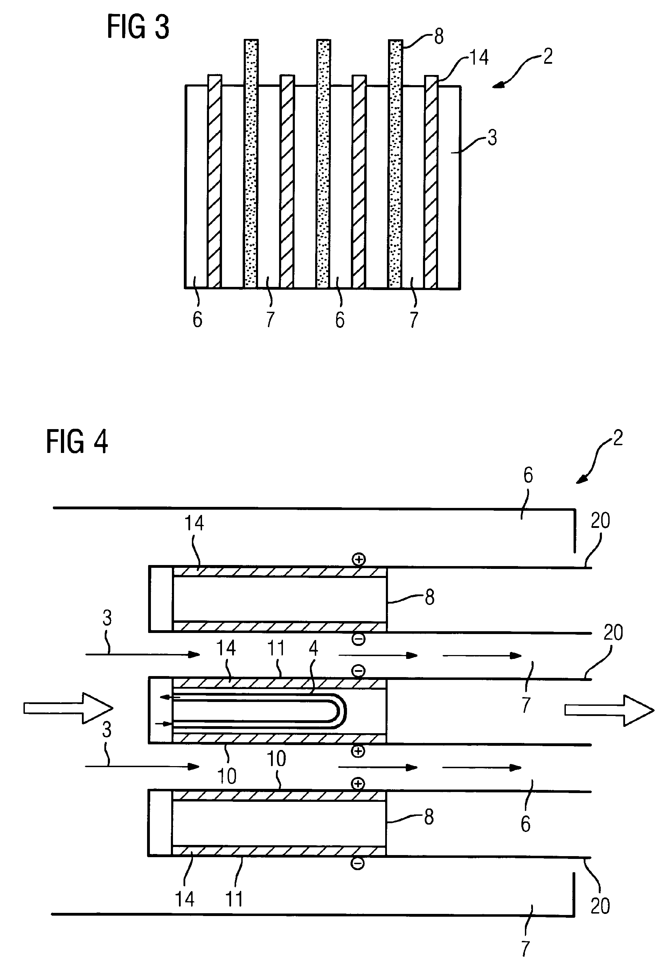

In Figur 3 ist eine Vorrichtung 2 dargestellt, die schematisch dem Aufbau der Figuren 1 und 2 entspricht, wo jedoch die Zellen in Reihe geschaltet sind. Somit treten hierbei alternierende Gasräume 6 und 7 auf, die jeweils wieder Elektroden 14 umfassen und die durch die Elemente 8 getrennt sind.

In Figur 4 ist eine alternative Ausgestaltungsform der Vorrichtung 2 beschrieben, wobei in dieser Ausgestaltungsform das Wasser nicht in statischer Form in den Gasräumen 6 und 7 vorliegt, sondern dass die Gasräume 6 und 7 durch das Wasser 3 durchströmt wird. Die Gasräume 6 und 7 sind insofern in Form von Kanälen ausgebildet, durch die das Wasser strömt. Neben den Elementen 8, die die einzelnen Gasräume 6 und 7 voneinander trennen, ist auch hier eine weitere Trennanordnung 20 dargestellt, die ebenfalls die Trennung zwischen den Gasräumen 6 und 7 bewirkt und dabei so ausgestaltet ist, dass eine möglichst laminare Strömung vorherrscht. Die Gasabführung ist in Figur 4 nicht näher dargestellt. Die Temperierung der Elemente 8 in Figur 4 erfolgt analog der Temperierung in Figur 2.

In Figur 5 ist eine weitere Ausgestaltungsform des Elementes 8 dargestellt. Hierbei besteht das Element 8 im Kern aus einem gut wärmeleitenden und einem gut elektrisch leitenden Material, beispielsweise aus Kupfer, das die Elektrode 14 bildet. Ferner ist diese Elektrode 14 direkt mit der Temperiervorrichtung 4 gekoppelt, wobei hier eine direkte Wärmeübertragung von der Temperiervorrichtung 4 auf die Elektrode 14 erfolgt. Diese Wärmeübertragung erfolgt durch Wärmeleitung. An den Oberflächen 10 und 11 des Elementes, ist pyroelektrisches Material in kristalliner Form aufgebracht. Hierbei ist darauf zu achten, dass die Kristallstruktur des pyroelektrischen Materials eine Vorzugsrichtung aufweist. Diese Vorzugsrichtung ist beispielsweise bei Aufbringen der Kristallstruktur auf die Elektrode 14 durch Anwendung von gerichteten elektrischen Feldern zu bewirken. Durch elektrische Felder werden die Kristalle zu einem gerichteten Wachstum angehalten.

Das in Figur 5 beschriebene Element 8 kann grundsätzlich auch in einem der vorangegangenen Figuren als Element 8 ersetzt werden.

## Patentansprüche

1. Vorrichtung zum Spalten einer chemischen Verbindung (3), umfassend eine Temperiervorrichtung (4), zwei von einander getrennte Gasräume (6, 7) sowie ein, ein pyroelektrisches Material umfassendes Element (8), wobei das das pyroelektrische Material umfassende Element (8) mindestens zwei Oberflächen (10, 11) mit unterschiedlich polarisierten Ladungen aufweist, die zumindest teilweise im Kontakt mit der zur spaltenden chemischen Verbindung stehen und von denen mindestens zwei der Oberflächen (10, 11) jeweils einem der getrennten Gasräumen (6, 7) zugewandt ist und die an den Oberflächen (10, 11) entstehenden Gase (12, 13) von einander getrennt in den der jeweiligen Oberfläche (10, 11) zugeordneten Gasraum gelangen.

2. Vorrichtung nach Anspruch 1, **dadurch gekennzeichnet, dass** die Oberflächen (10, 11) des Elements (8) zumindest teilweise durch eine Elektrode (14) ausgebildet ist.

3. Vorrichtung nach Anspruch 1, **dadurch gekennzeichnet, dass** eine Elektrode (14) vorgesehen ist, die von der Oberfläche des Elements beabstandet angeordnet ist

4. Vorrichtung nach Anspruch 3, **dadurch gekennzeichnet, dass** zwischen der Elektrode (14) und der Oberfläche (1) des Elementes die zu spaltende chemische Verbindung angeordnet ist.

5. Vorrichtung nach einem der vorhergehenden Ansprüchen, **dadurch gekennzeichnet, dass** die zu spaltende chemische Verbindung (3) Wasser ist.

6. Vorrichtung nach einem der vorhergehenden Ansprüchen, **dadurch gekennzeichnet, dass** die Temperiervorrichtung (4) durch ein Wärmeübertragungsmedium (16) gespeist wird, das Abwärme aus einem thermischen Prozess überträgt.

7. Verfahren zum spalten einer chemischen Verbindung (3), wobei die chemische Verbindung in Kontakt mit zwei Oberfläche (10, 11) eines pyroelektrisches Material enthaltenen Elements (8) gebracht wird, das pyroelektrische Material durch eine Temperiervorrichtung mit einer zeitlich dynamischen Temperaturänderung unterzogen wird, wodurch an den Oberflächen (10, 11) Ladungen entstehen durch die chemische Verbindung (3) in gasförmige Verbindungen (12, 13) gespaltet wird die jeweils in zwei, durch das Element (8) getrennte Gasräume (6, 7) abgeleitet werden, wobei die gasförmigen Verbindungen (12, 13) an jeder Oberfläche (10, 11) unterschiedlich chemische Zusammensetzungen aufweisen.

## Claims

1. Device for splitting a chemical compound (3), comprising a temperature control device (4), two separate gas chambers (6, 7), and an element (8) comprising pyroelectric material, wherein the element (8) comprising the pyroelectric material has at least two surfaces (10, 11) with differently polarized charges, which are at least partially in contact with the chemical compound to be split and of which at least two of the surfaces (10, 11) are respectively facing one of the separate gas chambers (6, 7), and the gases (12, 13) produced on the surfaces (10, 11) separately reach the gas chamber associated with the respective surface (10, 11).

2. Device according to Claim 1, **characterized in that** the surfaces (10, 11) of the element (8) are at least partially formed by an electrode (14).

3. Device according to Claim 1, **characterized in that** an electrode (14) that is arranged at a distance from the surface of the element is provided.

4. Device according to Claim 3, **characterized in that** the chemical compound to be split is arranged between the electrode (14) and the surface (1) of the element.

5. Device according to one of the preceding claims, **characterized in that** the chemical compound (3) to be split is water.

6. Device according to one of the preceding claims, **characterized in that** the temperature control device (4) is fed by a heat transfer medium (16), which transfers waste heat from a thermal process.

7. Method for splitting a chemical compound (3), wherein the chemical compound is brought into contact with two surfaces (10, 11) of an element (8) containing pyroelectric material and the pyroelectric material is subjected to a temporally dynamic temperature change by a temperature control device, whereby charges are produced on the surfaces (10, 11) and have the effect of splitting the chemical compound (3) into gaseous compounds (12, 13), which are respectively carried away into two gas chambers (6, 7) separated by the element (8), the gaseous compounds (12, 13) on each surface (10, 11) having different chemical compositions.

## Revendications

1. Dispositif de décomposition d'un composé (3) chimique comprenant un dispositif (4) de mise en température, deux espaces (6, 7) pour du gaz séparés l'un de l'autre, ainsi qu'un élément (8) comprenant une matière pyroélectrique, l'élément (8) comprenant une matière pyroélectrique comportant au moins deux surfaces (10, 11) ayant des charges polarisées différemment, qui sont au moins partiellement en contact avec le composé chimique à décomposer et dont au moins deux des surfaces (10, 11) sont tournées respectivement vers l'un des espaces (6, 7) pour du gaz séparés et les gaz (12, 13) créés sur les surfaces (10, 11) arrivent séparément l'un de l'autre dans l'espace pour du gaz associé à la surface (10, 11) respective.

2. Dispositif suivant la revendication 1, **caractérisé en ce que** les surfaces (10, 11) de l'élément (8) sont constituées au moins en partie par une électrode (14).

3. Dispositif suivant la revendication 1, **caractérisé en ce qu'**il est prévu une électrode (14) qui est à distance de la surface de l'élément.

4. Dispositif suivant la revendication 3, **caractérisé en ce que** le composé chimique à décomposer est disposé entre l'électrode (14) et la surface (1) de l'élément.

5. Dispositif suivant l'une des revendications précédentes, **caractérisé en ce que** le composé (3) chimique à décomposer est de l'eau.

6. Dispositif suivant l'une des revendications précédentes, **caractérisé en ce que** le dispositif (4) de mise en température est alimenté par un fluide (16) de transfert de chaleur, qui transmet de la chaleur perdue d'un processus thermique.

7. Procédé de décomposition d'un composé (3) chimique, le composé chimique étant mis en contact avec deux surfaces (10, 11) d'un élément (8) contenant une matière pyroélectrique, la matière pyroélectrique étant soumise par un dispositif de mise en température à une variation de température dynamique dans le temps, ce qui crée sur les surfaces (10, 11) des charges par lesquelles le composé (3) chimique est décomposé en des composés (12, 13) gazeux qui sont évacués respectivement dans deux espaces (6, 7) pour du gaz séparés par l'élément (8), les composés (12, 13) gazeux ayant sur chaque surface (10, 11) des compositions chimiques différentes.
